Europäisches Patentamt

(19) European Patent Office

Office européen des brevets

(11) Veröffentlichungsnummer: **0 038 921**
**B1**

(12) **EUROPÄISCHE PATENTSCHRIFT**

(45) Veröffentlichungstag der Patentschrift:
**23.11.83**

(51) Int. Cl.³: **A 01 N 25/20**

(21) Anmeldenummer: **81101606.2**

(22) Anmeldetag: **06.03.81**

(54) **Mittel zur Sublimation fungizider Wirkstoffe.**

(30) Priorität: **06.03.80 DE 3008644**

(43) Veröffentlichungstag der Anmeldung:
**04.11.81 Patentblatt 81/44**

(45) Bekanntmachung des Hinweises auf die Patenterteilung:
**23.11.83 Patentblatt 83/47**

(84) Benannte Vertragsstaaten:
**AT BE CH DE FR IT LI NL**

(56) Entgegenhaltungen:
**DE - B - 1 058 895**
**DE - B - 1 120 336**
**DE - C - 914 448**

(73) Patentinhaber: **WACKER-CHEMIE GMBH,**
**Prinzregentenstrasse 22, D-8000 München 22 (DE)**

(72) Erfinder: **Klöhn, Wolfgang, Dr., Stufelweg 9,**
**D-7507 Pfinztal 2 (DE)**
Erfinder: **Müller, Dieter, Rheinstrasse 31,**
**D-7500 Karlsruhe (DE)**
Erfinder: **Schubert, Hiltmar, Dr., Dahlienweg 6,**
**D-7519 Walzbachtal 2 (DE)**

## Mittel zur Sublimation fungizider Wirkstoffe

Die Erfindung betrifft in gepresste Form gebrachte Mittel zur Sublimation fungizider Wirkstoffe auf Basis von feinteiligem Holz, Oxidationsmittel, Schwelstoff, polymeren Bindemitteln und ggf. Verarbeitungshilfsstoff.

Mit Fungiziden ausgestattete Räuchermittel werden vorwiegend zur Bekämpfung pilzlicher Krankheiten von Pflanzen in geschlossenen Räumen eingesetzt. Es sind bereits derartige Räuchermittel, die als Trägermaterial Holzmehl enthalten, bekanntgeworden. Um eine vollständige Verschwelung dieser Mittel zu sichern, enthalten sie in der Regel grosse Mengen an Oxidationsmittel, insbesondere Nitrate.

Nachteiligerweise steigt die Temperatur während des Verglimmens dieser Präparate zumeist auf über 500° C, wodurch ein relativ grosser Anteil an Wirkstoff zerstört wird.

Gemäss der DE-AS Nr. 1058895 wird dieser Nachteil umgangen, indem der Räuchermassen 1,5-Endomethylen-3,7-dinitroso-1,3,5,7-tetraazacyclooctan und andere, thermisch zersetzbare organische Stickstoffverbindungen zugegeben werden. Die obengenannte, auch auf dem Sprengstoffsektor eingesetzte Substanz entwickelt bereits bei Temperaturen weit unterhalb von 500° C ein grosses Gasvolumen, so dass der Wirkstoff nicht nur durch Sublimation, sondern zum grossen Teil durch Verblasen freigesetzt wird.

Weiterhin wird in der DE-AS Nr. 1120336 ein Mittel zur Verräucherung chemischer Substanzen vorgestellt, das in der Hauptsache aus Hexamethylentetraamindinitrat und Wirkstoff besteht.

Neben ihrer zum Teil aus Sicherheitsgründen schwierigen Handhabung entwickeln die obengenannten Mittel jedoch beim Glimmen erhebliche Mengen nitroser Gase, die unvermeidlich Schädigungen an den zu behandelnden Pflanzen hervorrufen.

Aufgabe der Erfindung war es nun, Mittel zur Sublimation fungizider Wirkstoffe vorzustellen, die beim Glimmen praktisch keine nitrosen Gase entwickeln. Weiterhin war das Problem zu lösen, bei der Verschwelung der Mittel einerseits einen Kontinuierlichen und vollständigen Glimmprozess zu sichern und andererseits Glimmtemperaturen von etwa 300 bis 400° C einzuhalten.

Diese Aufgabe wird erfindungsgemäss gelöst durch Mittel zur Sublimation fungizider Wirkstoffe aus Basis von Feinteiligem Holz, Oxidationsmittel, Schwelstoff, polymeren Bindemitteln und ggf. Verarbeitungshilfsstoff mit einem Gehalt an

5-25 Gew.-% an, bei 300 bis 400° C sublimierbarem Fungizid,
20-50 Gew.-% feinteiligem Holz,
10-20 Gew.-% Oxidationsmittel,
10-30 Gew.-% Schwelstoff, und
15-25 Gew.-% polymerem Bindemittel,

wobei die Oxidationsmittel, Schwelstoffe und polymeren Bindemittel keinen chemisch gebundenen Stickstoff enhalten und zumindest eine

solche Wasserlöslichkeit aufweisen, dass 2 Gew.-Teile Oxidationsmittel, 2 Gew.-Teile Schwelstoff und 3 Gew.-Teile polymeres Bindemittel in 10 Gew.-Teilen Wasser löslich sind, die erhältlich sind durch

a) Vermischen von feinteiligem Holz mit einem bei 300 bis 400° C sublimierbaren Fungizid;
b) Aufbringen auf das feinteilige Holz einer sauerstoffspendenden, wasserlöslichen anorganischen Substanz, wasserlöslicher Kohlehydrate als Schwelstoff und chemisch gebundenen Sauerstoff enthaltender, wasserlöslicher Polymerer als Bindemittel aus wässeriger Lösung;
c) Trocknen der Mischung, und
d) Verpressen der Mischung.

Die erfindungsgemässen Mittel enthalten die jeweiligen Komponenten in sorgfältiger Abstimmung. Sie weisen einen Gehalt auf an

a) 20-50 Gew.-%, vorzugsweise 30-40 Gew.-% feinteiligem Holz,
b) 10-20 Gew.-%, vorzugsweise 12-18 Gew.-%, besonders bevorzugt knapp unter 15 Gew.-% Oxidationsmittel,
c) 10-30 Gew.-%, vorzugsweise 15-20 Gew.-% Schwelstoff, und
d) 15-25 Gew.-% polymerem Bindemittel.

Gegebenenfalls werden 0,5 bis 2 Gew.-% Verarbeitungshilfsstoff zugegeben. Weiterhin können 0-20 Gew.-% Füllstoffe zugemischt werden.

Beispiele für erfindungsgemäss einzusetzende fungizide Wirkstoffe sind Captafol und Thiabendazol. Es können aber auch andere, bei 300 bis 400° C sublimierbare Fungizide zur Anwendung kommen.

Als feinteiliges Holz wird am besten Hartholzmehl eingesetzt, Beispiele sind Eichen- und Buchenholzmehl. Die günstigsten Resultate werden mit Mehlen von bis zu 1 mm Korngrösse erzielt.

Als Oxidationsmittel eignen sich stickstofffreie, sauerstoffspendende, wasserlösliche anorganische Substanzen. Beispiele sind Natriumchlorat, Kaliumchlorat, Bariumchlorat, Natriumperchlorat, Kaliumperchlorat und andere Alkali- und Erdalkalichlorate und -perchlorate. Die Oxidationsmittel können einzeln oder im Gemisch verwendet werden.

Die Schwelstoffe sollten chemisch gebundenen Sauerstoff enthalten. Vor allem kommen — zumindest in heissem Wasser lösliche — Kohlenhydrate in Betracht. Beispiele sind die Disaccharide, insbesondere Saccharose une Laktose. Ebenso können jedoch auch beispielsweise Monosaccharide bzw. deren Abkömmlinge, wie Sorbit, eingesetzt werden.

Als polymere Bindemittel werden bevorzugt chemisch gebundenen Sauerstoff enthaltende, wasserlösliche Polymere, wie Polyvinylalkohol und/oder Polyäthylenglycol verwendet. Beispiele für feinteilige Füllstoffe sind hochdisperse Kieselsäure, oberflächenreiche Metalloxide, Russ u.a. Ein Beispiel für einen ggf. zugesetzten Verarbeitungshilfsstoff ist Aluminiumstearat.

Die eingesetzten Oxidationsmittel, Schwelstoffe und polymeren Bindemittel sollten vorteilhafterweise eine solche Wasserlöslichkeit aufweisen, dass aus einer Lösung von 2 Teilen Oxidationsmittel, 2 Teilen Schwelstoff und 3 Teilen Bindemittel eine mindestens 50%ige, ggf. erhitzte, wässerige Lösung darstellbar ist.

Es kommt wesentlich darauf an, die genannten Stoffe in feiner Verteilung auf das Trägermaterial aufzubringen, was insbesondere durch Aufbringen der Komponenten aus Lösungen garantiert wird. Dadurch wird beispielsweise die Bildung von gröberen Kristallen des Oxidationsmittels vermieden, die während des Schwelprozesses durch örtliches Aufflammen die Schwelgase entzünden könnten.

Es ist bevorzugt, das eingesetzte Holzmehl einer Vortrocknung zu unterwerfen, wobei vorteilhafterweise eine Endfeuchte von ca. 1% erreicht werden soll. Durch diese Massnahme können die aus wässeriger Lösung aufgebrachten Stoffe nicht nur auf der Oberfläche feinverteilt werden, sondern auch in den Festkörper eindringen.

Die erhaltene Mischung wird anschliessend bei Temperaturen um 100°C getrocknet, ggf., um zusammengebackene Teilchen zu zerkleinern, einem Mahlprozess unterworfen und schliesslich in die gewünschte Form gepresst.

Der Pressvorgang sollte so gesteuert werden, dass ein Körper von einheitlicher Dichteverteilung entsteht. Zweckmässigerweise sollte ebenso ein guter Kompromiss zwischen einerseits mechanischer Festigkeit, die entsprechend hohe Drücke erfordert, und andererseits einer nicht allzu hohen, die Freisetzung der Wirkstoffe behindernden Dichte der Präparate erzielt werden.

Die besten Resultate wurden bei Pressdrücken von 60 bis 90 MN/m² erzielt.

Die Herstellung der erfindungsgemässen Mittel kann in üblichen Vorrichtungen vorgenommen werden.

Die Aufbereitung des Holzmehls erfolgt zweckmässig in Schneidmühlen u. dgl. Zur Einstellung der gewünschten Korngrösse wird das Mehl durch entsprechende Siebvorrichtungen passiert. Die Mischung der Komponenten kann in üblichen Planeten- oder Zwangsmischern erfolgen.

Die erfindungsgemässen Mittel erlauben die Sublimation des fungiziden Wirkstoffs in Ausbeuten von ca. 90%.

Die feine Verteilung der Komponenten bewirkt eine so günstige Anzündwilligkeit der erfindungsgemässen Mittel, dass sie mit handelsüblichen Streichhölzern entzüdet werden können. Weiterhin ist nur eine verhältnismässig geringe Konzentration, insbesondere unter 15 Gew.-%, an Oxidationsmittel, beispielsweise Kaliumchlorat, erforderlich.

Schliesslich konnte der Herstellungsprozess der erfindungsgemässen Mittel vom sicherheitstechnischen Standpunkt aus erheblich verbessert werden, da die reib- und schlagempfindlichen Oxidationsmittel beim Mischungprozess durch die Lösung in Wasser phlegmatisiert sind. Damit entfallen die besonderen Sicherheitsvorkehrungen, die sonst bei der Herstellung von pyrotechnischen Artikeln erforderlich sind.

*Beispiel 1:*

35,5 kg auf maximal 1 mm Korngrösse ausgesiebten Eichenmehls werden zusammen mit 15 kg an Fungizidwirkstoff Thiabendazol in einem Vertikalmischer vorgelegt und kurze Zeit vermischt. Anschliessend werden 99,5 kg einer 50%igen wässerigen Lösung von Saccharose, Polyäthylenglykol und Kaliumchlorat beigegeben und weitere 10 min gemischt.

Die Lösung der genannten 3 Substanzen in Mengen von

15 kg Saccharose
20 kg Polyäthylenglykol, und
14,5 kg Kaliumchlorat

in 50 kg Wasser erfolgt bei 85°C in einem separaten Rührgefäss. Die Mischung sämtlicher Komponenten wird anschliessend bei 100°C getrocknet, um zusammengebackene Teile zu zerkleinern, nochmals einer Schneidmühle aufgegeben.

100 g des erhaltenen Granulats werden schliesslich ohne weitere Vorarbeiten in eine Pressform gefüllt und bei 70 MN/m² verpresst.

Das verpresste Material wird mit einem Streichholz entzündet und schwelt ohne Flammenerscheinung ab. Es wird eine Ausbeute von 90% an sublimiertem Wirkstoff erzielt.

## Patentansprüche

1. Mittel zur Sublimation fungizider Wirkstoffe auf Basis von feinteiligem Holz, Oxidationsmittel, Schwelstoff, polymeren Bindemitteln und ggf. Verarbeitungshilfsstoff mit einem Gehalt an

5-25 Gew.-% an, bei 300 bis 400°C sublimierbarem Fungizid,
20-50 Gew.-% feinteiligem Holz,
10-20 Gew.-% Oxidationsmittel,
10-30 Gew.-% Schwelstoff, und
15-25 Gew.-% polymerem Bindemittel,

wobei die Oxidationsmittel, Schwelstoffe und polymeren Bindemittel keinen chemisch gebundenen Stickstoff enthalten und zumindest eine solche Wasserlöslichkeit aufweisen, dass 2 Gew.-Teile Oxidationsmittel, 2 Gew.-Teile Schwelstoff und 3 Gew.-Teile polymeres Bindemittel in 10 Gew.-Teilen Wasser löslich sind, erhältlich durch

a) Vermischen von feinteiligem Holz mit einem bei 300 bis 400°C sublimierbaren Fungizid;

b) Aufbringen auf das feinteilige Holz einer sauerstoffspendenden, wasserlöslichen anorganischen Substanz, wasserlöslicher Kohlehydrate als Schwelstoff und chemisch gebundenen Sauerstoff enthaltender, wasserlöslicher Polymerer als Bindemittel aus wässeriger Lösung;

c) Trocknen der Mischung, und

d) Verpressen der Mischung.

2. Mittel nach Anspruch 1, dadurch gekennzeichnet, dass es bei Drücken von 60 bis 90 MN/m² verpresst wird.

3. Verwendung von Mitteln nach den Ansprüchen 1 und 2 in geschlossenen Räumen.

## Claims

1. Agent for the sublimation of fungicidally active substances, based on finely divided wood, an oxidising agent a low-temperature carbonizing substance polymeric binders and, optionally, a processing auxiliary, containing:

from 5 to 25% by weight of fungicide which is sublimable at from 300 to 400°C,

from 20 to 50% by weight of finely divided wood,

from 10 to 20% by weight of oxidising agent,

from 10 to 30% by weight of low-temperature carbonizing substance, and

from 15 to 25% by weight of polymeric binder, the oxidising agents, low-temperature carbonizing substances and polymeric binders containing no chemically bonded nitrogen and being soluble in water at least to the extent that 2 parts by weight of oxidising agent, 2 parts by weight of low-temperature carbonizing substance and 3 parts by weight of polymeric binder are soluble in 10 parts by weight of water, and obtainable by:

a) mixing finely divided wood with a fungicide which is sublimable at from 300 to 400°C,

b) applying to the finely divided wood, from aqueous solution, an oxygen-donating water-soluble inorganic substance, water-soluble carbohydrates as the low-temperature carbonizing substance, and water-soluble polymers containing chemically bonded oxygen as the binders,

c) drying the mixture, and

d) compressing the mixture.

2. Agent according to claim 1, characterized in that it is compressed at pressures of from 60 to 90 MN/m².

3. Use of agents according to claims 1 and 2 in enclosed spaces.

## Revendications

1. Produit pour la sublimation de matières actives fongicides, à base de bois finement divisé, d'un oxydant, d'un agent de carbonisation à basse température, de liants polymères et éventuellement d'un auxiliaire de mise en œuvre, ayant une teneur de:

5-25% en poids d'un fongicide pouvant se sublimer à 300-400°C,

20-50% en poids de bois finement divisé,

10-20% en poids d'un oxydant,

10-30% en poids d'un agent de carbonisation, et

15-25% en poids d'un liant polymère,

dans lequel les oxydants, agents de carbonisation et liants polymères ne contiennent pas d'azote chimiquement lié et présentent au moins une solubilité dans l'eau telle que 2 parties en poids d'oxydant, 2 parties en poids d'agent de carbonisation et 3 parties en poids d'un liant polymère soient solubles dans 10 parties en poids d'eau, que l'on peut obtenir:

a) en mélangeant du bois finement divisé à un fongicide pouvant se sublimer à une température de 300 à 400°C,

b) en appliquant à partir d'une solution aqueuse, sur le bois finement divisé, une substance inorganique soluble dans l'eau cédant de l'oxygène, des hydrates de carbone solubles dans l'eau en tant qu'agent de carbonisation et des polymères solubles dans l'eau, contenant de l'oxygène chimiquement lié, en tant que liant,

c) en séchant le mélange, et

d) en comprimant le mélange.

2. Produit selon la revendication 1, caractérisé en ce que la compression s'effectue à des pressions de 60 à 90 MN/m².

3. Utilisation de produits selon les revendications 1 et 2 dans des locaux fermés.